# EUROPÄISCHE PATENTANMELDUNG

(11) **EP 1 512 624 A1**
(43) Veröffentlichungstag der Anmeldung: **09.03.2005**
(21) Anmeldenummer: 04020335.8
(22) Anmeldetag: 26.08.2004
(51) Int. Cl.: B64C 25/44

(54) **Luftfahrzeug-Fahrwerk**

(30) Priorität: 03.09.2003 DE 10340650
(71) Anmelder: Liebherr-Aerospace Lindenberg GmbH, 88161 Lindenberg/Allgäu (DE)
(72) Erfinder: Seung, Tähun, Dipl.-Ing., 88175 Scheidegg (DE)
(74) Vertreter: Thoma, Michael

(57) **Zusammenfassung**

Die vorliegende Erfindung betrifft ein Luftfahrzeugfahrwerk mit einer Fahrwerksbremse zum Bremsen mindestens eines Fahrwerksrades, und einer Hydraulikversorgung zur Betätigung der Fahrwerksbremse. Das Fahrwerk zeichnet sich erfindungsgemäß dadurch aus, dass die Hydraulikversorgung (1) eine von einem Fahrwerkrad antreibbare Hydraulikpumpe (12) aufweist.

## Beschreibung

Die vorliegende Erfindung betrifft ein Luftfahrzeugfahrwerk mit einer Fahrwerksbremse zum Bremsen mindestens eines Fahrwerksrades und einer Hydraulikversorgung zur Betätigung der Fahrwerksbremse.

Flugzeugfahrwerke werden regelmäßig hydraulisch gebremst, wobei die zur Betätigung der Bremse notwendige hydraulische Energie regelmäßig von der das entsprechende Fahrwerk versorgenden Hydraulikversorgung abgezweigt wird. In jüngerer Zeit wurde angedacht, die Fahrwerksbetätigung nicht mehr von der zentralen Hydraulikversorgung des Flugzeugs her zu speisen, sondern für die Fahrwerksbetätigung eine lokale Hydraulikversorgung vorzusehen. Bei solchen lokalen Hydraulikversorgungen steht jedoch nicht ohne weiteres ein Ausfallsystem zur Verfügung, durch das die für die Sicherheit notwendige Redundanz gewährleistet wäre. Es muss daher die Verfügbarkeit der Versorgung der Fahrwerksbremse bei Ausfall der genannten lokalen Versorgung sichergestellt bzw. allgemein erhöht werden. Weiterhin wäre es wünschenswert, die Effektivität des Energiehaushaltes und die dazugehörige Infrastruktur zu verbessern. Bei herkömmlichen Hydraulikversorgungssystemen ist es ein Problem, dass aus Redundanzgründen sowie zur Abdeckung singulärer Versorgungsspitzen entsprechend dimensionierte Versorgungseinheiten einschließlich Leitungen bereitgehalten werden, die jedoch nur minimale Zeitspannen tatsächlich in Betrieb sind.

Der vorliegenden Erfindung liegt daher die Aufgabe zugrunde, ein verbessertes Luftfahrzeugfahrwerk zu schaffen, das Nachteile des Standes der Technik vermeidet und letzteren in vorteilhafter Weise weiterbildet. Vorzugsweise soll die Verfügbarkeit der Bremsen erhöht und die Effektivität des Energiehaushaltes signifikant verbessert werden.

Erfindungsgemäß wird diese Aufgabe durch ein Luftfahrzeugfahrwerk nach Anspruch 1 gelöst. Bevorzugte Ausgestaltungen der Erfindung sind Gegenstand der Unteransprüche.

Erfindungsgemäß umfasst die Hydraulikversorgung zur Betätigung der Fahrwerksbremse also eine einem Fahrwerksrad zugeordnete Hydraulikpumpe, die von dem genannten Fahrwerksrad während der Bodenoperation passiv angetrieben wird und insbesondere eine Zusatzhydraulikversorgung bilden kann.

Durch die entsprechende Antriebsverbindung zwischen der Hydraulikpumpe und dem Rad des Fahrwerks treibt die Drehung des Rades die Hydraulikpumpe an, wodurch die Hydraulikversorgung der Fahrwerksbremse sichergestellt ist. Eine solche von einem Fahrwerksrad angetriebene Hydraulikpumpe zur Versorgung der Bremsen des Luftfahrzeugs besitzt vielerlei Vorteile. Zum Einen kann die Gesamtenergiebilanz des Flugzeuges verbessert werden. Die Pumpe wandelt bei der Landung die in diesem Moment unerwünschte kinetische Energie des Flugzeuges in die für den Bremsvorgang erforderliche hydraulische Energie um, und zwar kurz vor dem Zeitpunkt anfangen, wo sie tatsächlich benötigt wird und solange das Flugzeug rollt. Regelmäßig stellen Flugzeugführer bzw. Flugzeugsteuerung nämlich sicher, dass das Flugzeug nicht mit bereits gebremsten Rädern auf die Landebahn aufgesetzt bzw. dass die Fahrwerksbremsen erst einen gewissen Zeitversatz nach dem eigentlichen Aufsetzen betätigt werden können, um sicherzustellen, dass tatsächlich alle Fahrwerksräder am Boden sind. Dieser Zeitversatz, der sehr klein und nur wenige Bruchteile einer Sekunde betragen kann, reicht aus, um die vom Fahrwerksrad angetriebene Hydraulikpumpe anzuwerfen und die Bremsenergie zur Verfügung zu stellen. Die erzeugte hydraulische Energie soll in erster Linie die funktionierende Systemversorgung unterstützen. Im Fehlerfall (Ausfall der regelmäßigen Energieversorgung) kann sie die zur Bremsbetätigung notwendige, hydraulische Energieversorgung völlig übemehmen. Hinsichtlich der Energiebilanz besonders vorteilhaft ist es, dass die kinetische Energie des Flugzeuges unmittelbar in Hydraulikenergie umgewandelt wird, so dass sie ohne jegliche weitere Umwandlung zur Betätigung der hydraulischen Flugzeugbremsen benutzt werden kann.

Weiterhin ist die von der vom Fahrwerksrad angetriebene Hydraulikpumpe absolut unabhängig von den anderen Energiequellen des Flugzeugs, so dass die Verfügbarkeit der Bremsen erhöht werden kann. Ein weiterer Vorteil ist es, dass die mit dem Fahrwerksrad gekoppelte Hydraulikpumpe dazu benutzt werden kann, das entsprechende Fahrwerksrad bzw. die Fahrwerksräder nach dem Abheben zu bremsen, wenn das Fahrwerk eingefahren werden soll. Zum Teil werden hierzu spezielle Fahrwerksbremsen beispielsweise in Form von auf den Reifen wirkenden Bremsfederbügeln verwendet. Über die durch die Drehung des Rades angetriebene Hydraulikpumpe kann die unerwünschte kinetische Energie schneller vernichtet werden. Infolgedessen kann dieses Bremsen beim Einfahren des Fahrwerks nach dem Abheben vereinfacht werden.

In Weiterbildung der Erfindung sitzt die vom Fahrwerksrad angetriebene Hydraulikpumpe unmittelbar an dem Fahrwerksrad, insbesondere im Inneren des vom Radreifen umkreisten Raums.

Durch die Anordnung der Hydraulikpumpe im Felgenhohlraum kann eine sehr kompakte Anordnung erreicht werden, zudem ist sie durch die sie umgebende Felge bzw. den Radreifen geschützt. Vorzugsweise kann die Hydraulikpumpe auf der Radnabe sitzen.

Fahrwerke von modernen Passagierflugzeugen umfassen regelmäßig ein Hauptfahrwerk sowie ein Bugfahrwerk. Bei einer solchen Ausbildung des Fahrwerks wäre es grundsätzlich denkbar, die genannte Hydraulikpumpe an einem der Hauptfahrwerke anzuordnen. Wesentlich vorteilhafter ist es jedoch, wenn gemäß einer bevorzugten Ausführung der Erfindung die Hydraulikpumpe am Bugfahrwerk angeordnet ist, da dort mehr Platz zur Verfügung steht, um die zusätzliche Komponente anzuordnen. Am Bugfahrwerk sind normalerweise keine Bremsen vorgesehen, so dass insbesondere im Bereich der Radnabe Platz ist, um die Hydraulikpumpe anzuordnen. Darüber hinaus besitzt die Ankopplung der Hydraulikpumpe an die Bugfahrwerksräder den Vorteil, dass durch den Antriebswiderstand der Pumpe auch am Bugfahrwerk eine gewisse Bremswirkung eintritt. Diese Bremswirkung hat zudem den zusätzlichen vorteilhaften Effekt, dass die dadurch hervorgerufene Nickbewegung des Flugzeuges den Anpressdruck am Bugfahrwerk erhöht und hierdurch die Bodenhaftung verbessert wird.

Es können grundsätzlich verschieden ausgebildete Hydraulikpumpen Verwendung finden. In Weiterbildung der Erfindung wird eine Hydraulikpumpe an die Fahrwerksräder angekoppelt, deren Fördervolumen verstellbar ist. Durch eine Hydraulikpumpe mit einer Verstelleinrichtung zur Verstellung des Fördervolumens ist es möglich, die Fördermenge bzw. den Förderdruck in der gewünschten Weise einzustellen, vorzugsweise soweit wie möglich konstant zu halten. Vorzugsweise kann mit der Verstelleinrichtung das Fördervolumen auch auf Null gefahren werden, so dass die Hydraulikpumpe leerläuft. In dieser Stellung kann sich das entsprechende Fahrwerksrad völlig frei drehen. Insbesondere bei der genannten Anordnung der Hydraulikpumpe am Bugfahrwerk ist dies vorteilhaft, da beim Start und beim Taxibetrieb die Pumpe in der Leerlaufstellung gehalten werden kann, wodurch weder der Beschleunigungsvorgang noch die Wendigkeit der Bugradlenkung beeinflusst wird. Insbesondere kann als Hydraulikpumpe eine Axialkolbenpumpe mit verstellbarem Hubregelmechanismus Verwendung finden.

Die Verstellvorrichtung der Hydraulikpumpe ist vorteilhafterweise elektrisch ansteuerbar. Dabei ist die Verstellvorrichtung vorteilhafter Weise derart ausgebildet, dass sie sich bei einem Ausfall der elektrischen Betätigungsvorrichtung automatisch in die Leerlaufstellung rückstellt. Ein solcher automatischer Rücksteller besitzt den Vorteil, dass bei Ausfall der elektrischen Betätigungsvorrichtung sichergestellt ist, dass das Bugrad widerstandslos und frei drehbar wird.

Gleichmäßigerweise bildet die Hydraulikversorgung, in die die vom Fahrwerksrad angetriebene Hydraulikpumpe einspeist, keine Hydraulikversorgung, die exklusiv für die Betätigung der Fahrwerksbremsen vorgesehen ist. Vorteilhafterweise ist die genannte Hydraulikversorgung außer mit der Fahrwerksbremse auch mit weiteren Aktoren zur Betätigung des Fahrwerks, insbesondere zum Öffnen und Schließen einer Fahrwerksklappe, zum Ein- und Ausfahren des Fahrwerks, zur Verriegelung des Fahrwerks und/oder zum Lenken des Fahrwerks verbindbar. Die Hydraulikversorgung bildet jedoch vorteilhafterweise eine lokale Hydraulikversorgung, die allein zur Fahrwerksbetätigung einschließlich der Betätigung der Fahrwerksbremsen vorgesehen ist. Die Hydraulikversorgung besitzt zusätzlich zur vom Fahrwerksrad angetriebenen Hydraulikpumpe eine von einem elektrischen Motor antreibbare Hauptpumpe. Die vom Fahrwerksrad angetriebene Hydraulikpumpe bildet lediglich eine Zusatzpumpe, die Energie für das Bremsen der Fahrwerksräder bereitstellt.

In Weiterbildung der Erfindung speist die vom Fahrwerksrad angetriebene Hydraulikpumpe einen Druckspeicher, der mit der Fahrwerksbremse verbindbar ist. Andererseits kann die genannte Hydraulikpumpe auf ihrer Ansaugseite mit einem zentralen Niederdruckreservoir der Hydraulikversorgung verbunden sein. Der Druckspeicher, von dem aus die Fahrwerksbremse gespeist wird, ist vorteilhafterweise ebenso mit der Hauptpumpe der Hydraulikversorgung verbindbar, so dass eine Redundanz erreicht ist.

Die genannte Hydraulikversorgung zur Fahrwerksbetätigung, in die die am Bugfahrwerk angeordnete Hydraulikpumpe einspeist, ist in Weiterbildung der Erfindung die Hydraulikversorgung des Hauptfahrwerks. Die am Bugfahrwerk angeordnete Hydraulikpumpe ist hierzu über mindestens eine Druckleitung mit der Hydraulikversorgung des Hauptfahrwerks verbunden. Insofern als die Hydraulikversorgung des Hauptfahrwerks zwei Zweige, nämlich für das linke Hauptfahrwerk und das rechte Hauptfahrwerk aufweist, ist die am Bugfahrwerk angeordnete Hydraulikquelle zweckmäßigerweise über zwei Druckleitungen mit dem rechten Strang und dem linken Strang der Hauptfahrwerkhydraulikversorgung verbunden. Zusätzlich ist die bugfahrwerkseitige Hydraulikpumpe über eine weitere Hydraulikleitung mit dem zentralen Niedrigdruckreservoir der Haupfahrwerkversorgung verbunden, so dass insgesamt drei Hydraulikleitungen vorgesehen sind.

Regelmäßig besitzt das Bugfahrwerk von gängigen Transportflugzeugen mehr als ein Fahrwerksrad. In diesem Fall sind vorteilhafterweise zwei Hydraulikpumpen am Bugfahrwerk vorgesehen, von denen eine mit einem ersten Fahrwerksrad und die andere mit einem weiteren Fahrwerksrad gekoppelt ist. Die Druckausgänge der beiden Hydraulikpumpen sind vorteilhafterweise einerseits mit dem linken Strang der Hauptfahrwerkshydraulikversorgung und andererseits mit dem rechten Strang der Hauptfahrwerkshydraulikversorgung verbunden.

In Weiterbildung der Erfindung werden die Hydraulikleitungen zwischen der mindestens einen bugfahrwerkseitig angeordneten Hydraulikpumpe und der Hydraulikversorgung des Hauptfahrwerkes auch dazu genutzt, um die bugfahrwerkseitige Hydraulikversorgung zum Ein- und Ausfahren des Bugfahrwerks, zur Betätigung der entsprechenden Bugfahrwerksklappen und zur Steuerung des Bugfahrwerks, gegen Ausfall zu sichern oder gar komplett zu übernehmen. Die mindestens eine Hydraulikleitung, die die mindestens eine bugfahrwerksseitige Hydraulikpumpe mit der Hydraulikversorgung des Hauptfahrwerks verbindet, kann hierzu vorzugsweise über mindestens ein elektromagnetisches Schaltventil in eine Verbindung der Hydraulikversorgung des Hauptfahrwerks mit der Hydraulikversorgung des Bugfahrwerks umgeschaltet werden.

Die Erfindung wird nachfolgend anhand bevorzugter Ausführungsformen und zugehöriger Zeichnungen näher erläutert. In den Zeichnungen zeigen:

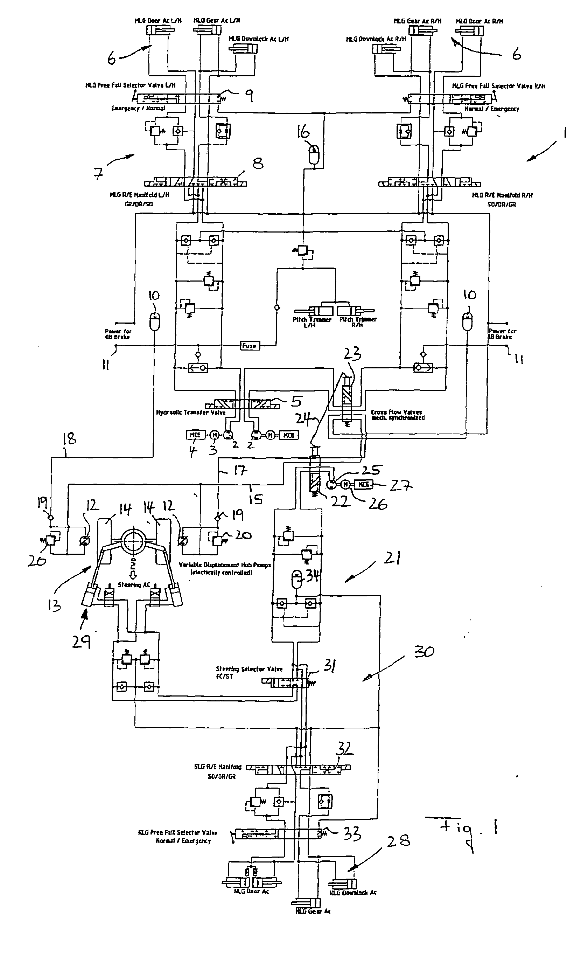

- Fig. 1:: eine schematische Darstellung der Hydraulikversorgungen eines Hauptfahrwerks und eines Bugfahrwerks eines Flugzeuges in einem Schaltplan, wobei ebenfalls schematisch das Bugfahrwerk und diesem zugeordnete Hydraulikversorgungspunkten sowie deren Anschluss an die Hydraulikversorgung des Hauptfahrwerks zur Bereitstellung von hydraulischer Bremsenergie dargestellt ist.

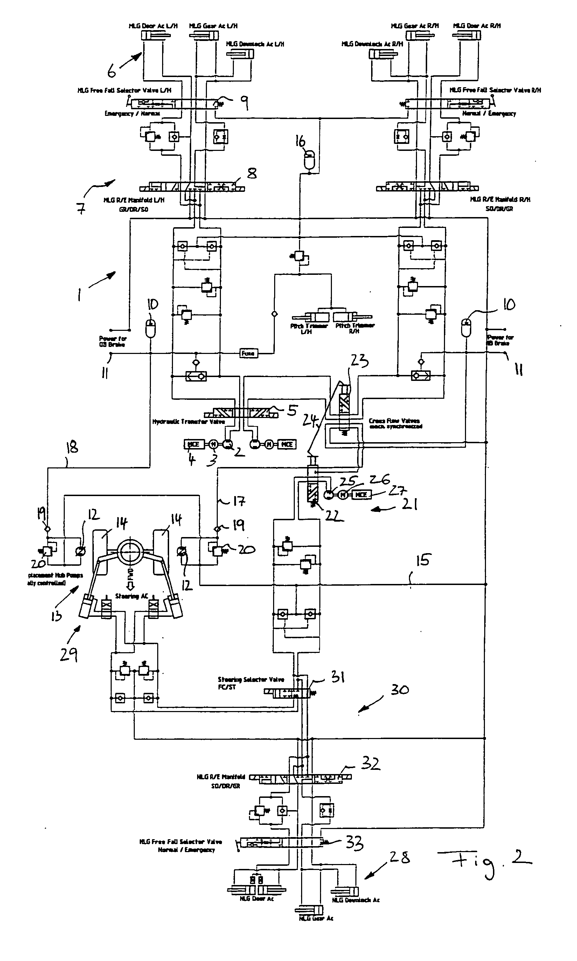

- Fig. 2:: eine schematische Darstellung eines Hauptfahrwerks und eines Bugfahrwerks eines Flugzeugs nach einer weiteren bevorzugten Ausführung der Erfindung, wobei ebenfalls das Bugfahrwerk sowie daran angeschlossene Hydraulikpumpen zur Erzeugung von hydraulischer Bremsenergie sowie deren Anschluss an die Hydraulikversorgung des Hauptfahrwerkes dargestellt ist.

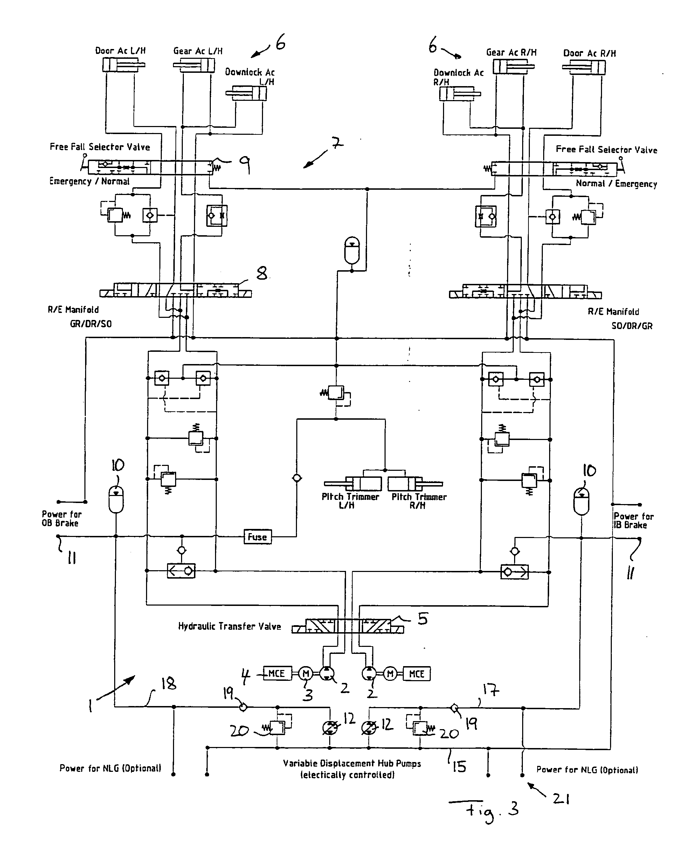

- Fig. 3:: eine schematische Darstellung einer für das Hauptfahrwerk und das Bugfahrwerk gemeinsamen Hydraulikversorgung in einem Schaltplan, wobei ebenfalls am Bugfahrwerk vorgesehene Hydraulikpumpen zur Erzeugung von Bremsenergie mit der Hydraulikversorung verbunden sind.

Wie Fig. 1 zeigt, umfasst die Hydraulikversorgung 1 des Hauptfahrwerks zwei Hydraulikpumpen 2, die über elektrische Motoren 3, die von Steuereinheiten 4 gesteuert werden, angetrieben sind. Die beiden Hydraulikpumpen 2 speisen eigentlich separat das rechte Hauptfahrwerk bzw. das linke Hauptfahrwerk, sie können jedoch bei Ausfall der jeweils anderen Pumpe über das Schaltventil 5 jeweils auf das andere Hauptfahrwerk geschaltet werden. Mit der von den Hydraulikpumpen 2 bereitgestellten Hydraulikflüssigkeit können Aktoren 6 beaufschlagt werden, die zur Betätigung einer Fahrwerksklappe, zum Ein- und Ausfahren des Fahrwerks und zur Entriegelung des Fahrwerks vorgesehen sind. Die Aktoren 6 sind dabei über eine Ventilanordnung 7 mit der jeweiligen Hydraulikpumpe 2 verbindbar, wobei die Ventilanordnung 7 derart ausgebildet ist, dass immer nur maximal ein Aktor mit der Hydraulikpumpe 2 verbindbar ist. Wie Fig. 1 zeigt, besteht die Ventilanordnung 7 aus in Serie geschalteten Schaltventilen 8 und 9, die ausgangsseitig immer nur einen Ausgangskanal bzw. ein Ausgangskanalpaar bestehend aus Hin- und Rückführleitung öffnen.

Weiterhin speisen die Hydraulikpumpen 2 der Hydraulikversorgung 1 des Hauptfahrwerks jeweils einen Druckspeicher 10 bzw. einen damit verbundenen Druckanschluss 11, der für die nicht eigens gezeichneten hydraulischen Bremsen des Hauptfahrwerks den notwendigen hydraulischen Druck zur Betätigung der Bremsen zur Verfügung stellt. Hydraulische Fahrwerksbremsen sowie die entsprechenden Aktoren zu ihrer Betätigung sind an sich bekannt, so dass diese nicht eigens erläutert zu werden brauchen.

Wie Fig. 2 zeigt, wird der Druckspeicher 10 sowie der Druckanschluss 11 für die hydraulischen Bremsen des Hauptfahrwerks von zwei zusätzlichen Hydraulikpumpen 12 gespeist, die am Bugfahrwerk 13 angeordnet sind und mit den Rädern 14 des Bugfahrwerks 13 gekoppelt sind, so dass sie durch die Drehung der Bugfahrwerksräder 14 angetrieben werden.

Insbesondere sind die Hydraulikpumpen 12 dabei im selben Hohlraum des jeweiligen Bugfahrwerksrades 14 eingebaut. Die Hydraulikpumpen 12 sind dabei als Axialkolbenpumpen ausgebildet, die einen verstellbaren Hubregelmechanismus und damit ein einstellbares Fördervolumen haben. Der Schrägscheibe ist eine Verstelleinrichtung und dieser wiederum eine elektrische Betätigungseinrichtung zugeordnet, so dass das Fördervolumen der Hydraulikpumpen 12 elektronisch steuerbar ist.

Wie Fig. 2 zeigt, sind die Ansaugseiten der Hydraulikpumpe 12 über eine Hydraulikleitung 15 mit dem gemeinsamen Niedrigdruckreservoir 16 der Hydraulikversorgung 1 des Hauptfahrwerks verbunden. Die Hochdruckseiten der Hydraulikpumpen 12 sind über Hydraulikleitungen 17 und 18 mit den Druckspeichern 10 bzw. den davon gespeisten Druckanschlüssen 11 für die hydraulischen Bremsen des Hauptfahrwerks verbunden. Dabei sind in die Hydraulikleitungen 17 und 18 jeweils Rückschlagventile 19 geschaltet, die ein Rückströmen der Hydraulikflüssigkeit vom Druckspeicher 10 her verhindern. Weiterhin sind die Hochdruckseiten der Hydraulikpumpen 12 über einen Kreisschluß mit den Niedrigdruckseiten verbunden, wobei diese Verbindung von druckgesteuerten Ventilen 20 gesperrt ist, solange der Druck auf der Hochdruckseite einen vorbestimmten Wert nicht überschreitet. Lediglich dann, wenn der Druck auf der Hochdruckseite zu hoch wird, wird der Kreisschluß geöffnet.

Wie Fig. 2 zeigt, wird die Hochdruck-Hydraulikleitung 17 zwischen der Hydraulikpumpe 12 und dem Druckspeicher 10 zur Versorgung der Bremsen auch für eine Notfall-Umschaltung genutzt. Für den Fall, dass die Hydraulikversorgung 21 des Bugfahrwerkes ausfällt, kann durch Betätigung der beiden Schaltventile 22 und 23 die Hydraulikquelle der Hydraulikversorgung 1 des Hauptfahrwerks auf die Hydraulikversorgung 21 des Bugfahrwerks umgeschaltet werden. Hierzu wird die Hydraulikleitung 17 von der Hydraulikpumpe 12 abgekappt, die andererseits über das Ventil 23 mit der Druckleitung der Hydraulikpumpe 2 der Hydraulikversorgung 1 des Hauptfahrwerks verbunden werden kann. Ebenso wird eine zusätzliche Rücklaufleitung geschaltet. Die beiden Schaltventile 22 und 23 sind vorteilhafterweise synchronisiert, vorzugsweise über eine mechanische Kopplung 24. Die mechanische Kopplung 24 kann dabei beispielsweise aus einem Seilzugmechanismus bestehen, an dem beide Ventile 22 und 23 angebunden sind und der die Ventile synchron betätigt. Alternativ kann auch ein elektromagnetisches Ventil vorgesehen sein, das über ein Seil bzw. über eine Stange mit dem zweiten Ventil, das mechanisch ausgebildet sein kann, verbunden ist. Anstelle einer mechanischen Kopplung kann auch eine elektrische Kopplung vorgesehen sein. Hier können die beiden Ventile jeweils ein Solenoid aufweisen, die über Software miteinander synchronisiert werden können.

Die zwischen den Hydraulikpumpen 12 am Bugfahrwerk 13 und den Bremsen am Hauptfahrwerk zu verlegenden Hydraulikleitungen 17, 18 können dementsprechend also einer doppelten Funktion zugeführt werden. Sie dienen nicht nur der Versorgung der Bremsen von den bugfahrwerkseitigen Pumpen, sondern auch der Versorgung des Bugfahrwerks, wenn dessen Hydraulikdruckquelle 25 ausfällt. Wie Fig. 2 zeigt, besitzt die Hydraulikversorgung 21 des Bugfahrwerks eine eigene Hydraulikpumpe 25, die von einem Motor 26 antreibbar ist, der von einer Steuerung 27 ansteuerbar ist. Ähnlich der Hydraulikversorgung 1 des Hauptfahrwerkes können mit dem durch die Pumpe 25 erzeugten Hydraulikdruck Aktoren 28 beaufschlagt werden, die der Betätigung des Bugfahrwerkes 13 dienen, insbesondere zur Betätigung der Bugwerksklappen, zum Ein- und Ausfahren des Bugfahrwerks sowie zur Entriegelung des Bugfahrwerks. Weiterhin können Aktoren 29 zur Steuerung des Bugfahrwerks davon beaufschlagt werden. Ähnlich der Hauptfahrwerkshydraulikversorgung sind auch bei der Hydraulikversorgung 21 des Bugfahrwerkes die Aktoren 28 und 29 über eine Ventilanordnung 30 mit derselben Hydraulikversorgungsquelle, nämlich der Pumpe 25 verbindbar, wobei die Ventilanordnung 30 derart ausgebildet ist, dass immer nur maximal ein Aktor mit der Hydraulikversorgungsquelle verbindbar ist. Insbesondere besteht die Ventilanordnung 30, wie Fig. 1 zeigt, aus in Serie geschalteten Schaltventilen 31, 32 und 33, die ausgangsseitig immer nur einen Ausgangskanal bzw. einen Ausgangskanal bestehend aus Hinund Rückführleitung öffnen.

Die in Fig. 2 gezeigte Vorrichtung entspricht weitgehend der soeben beschriebenen nach Fig. 1. Im Unterschied zu der Anordnung nach Fig. 1 besitzt hier die Hydraulikversorgung 21 des Bugfahrwerks kein eigenes Niedrigdruckreservoir, das in Fig. 1 mit der Bezugsziffer 34 gekennzeichnet ist, sondern ist an die Ansaugleitung 15 der Hydraulikpumpen 12 angeschlossen, die wiederum mit dem Niedrigdruckreservoir 16 der Hydraulikversorgung 1 des Hauptfahrwerks in Verbindung steht.

Schließlich zeigt Fig. 3 eine Anordnung, die ebenfalls weitgehend der in Verbindung mit Fig. 1 beschriebenen Anordnung entspricht, von dieser jedoch darin abweicht, dass die Hydraulikversorgung 21 des Bugfahrwerks keine eigene Hydraulikdruckwelle besitzt, sondern von der Hydraulikdruckwelle der Hydraulikversorgung 1 des Hauptfahrwerks, d. h. dessen Hydraulikpumpen 2 versorgt wird.

Auch hier sind jedoch die mit den Bugfahrwerksrädern verbundenen Hydraulikpumpen 12 vorgesehen, die das Druckreservoir 10 und den damit verbundenen Druckanschluß 11 für die Hauptfahrwerksbremsen speisen.

## Patentansprüche

1. Luftfahrzeugfahrwerk mit einer Fahrwerksbremse zum Bremsen mindestens eines Fahrwerkrades, und einer Hydraulikversorgung (1) zur Betätigung der Fahrwerksbremse,
**dadurch gekennzeichnet,**
**dass** die Hydraulikversorgung (1) eine von einem Fahrwerkrad antreibbare Hydraulikpumpe (12) aufweist.

2. Luftfahrzeugfahrwerk nach dem vorhergehenden Anspruch, wobei die Hydraulikpumpe (12) unmittelbar an dem Fahrwerkrad (14) sitzt, insbesondere an der Radnabe im Felgenhohlraum des Fahrwerkrades (14).

3. Luftfahrzeugfahrwerk nach einem der vorhergehenden Ansprüche, wobei es ein Bugfahrwerk (13) und zwei Hauptfahrwerke umfasst und die Hydraulikpumpe (12) am Bugfahrwerk (13) angeordnet und über Hydraulikleitungen (15, 17, 18) mit der Hydraulikversorgung (1) der Fahrwerksbremsen des Hauptfahrwerks verbindbar ist.

4. Luftfahrzeugfahrwerk nach einem der vorhergehenden Ansprüche, wobei ein Rumpffahrwerk und zwei Hauptfahrwerke vorgesehen sind und die Hydraulikpumpe (12) am Rumpffahrwerk angeordnet und über Hydraulikleitungen mit der Hydraulikversorgung der Fahrwerksbremsen der Hauptfahrwerke verbindbar ist.

5. Luftfahrzeugfahrwerk nach einem der vorhergehenden Ansprüche, wobei die Hydraulikpumpe (12) mit einer Verstellvorrichtung zur Verstellung des Fördervolumens versehen ist, insbesondere als Axialkolbenpumpe mit verstellbarem Hubregelmechanismus ausgebildet ist.

6. Luftfahrzeugfahrwerk nach dem vorhergehenden Anspruch, wobei die Verstellvorrichtung eine elektrische Betätigungsvorrichtung aufweist und ohne elektrische Betätigung von selbst in eine Leerlaufstellung, in der das Fördervolumen der Pumpe im Wesentlichen Null ist, läuft.

7. Luftfahrzeugfahrwerk nach einem der vorhergehenden Ansprüche, wobei die Hydraulikversorgung (1) eine lokale Hydraulikversorgung bildet, die allein zur Fahrwerksbetätigung vorgesehen ist und/oder außer mit der Fahrwerksbremse auch mit Aktoren (6) zum Öffnen und Schließen einer Fahrwerksklappe, zum Ein- und Ausfahren des Fahrwerks und/oder zum Verriegeln des Fahrwerks verbindbar ist.

8. Luftfahrzeugfahrwerk nach einem der vorhergehenden Ansprüche, wobei die Hydraulikversorgung (1) eine von einem elektrischen Motor (3) antreibbare Hauptpumpe (2) besitzt und die mit dem Fahrwerksrad (14) gekoppelte Hydraulikpumpe (12) eine Zusatzpumpe bildet.

9. Luftfahrzeugfahrwerk nach einem der vorhergehenden Ansprüche, wobei die Hydraulikpumpe (12) einen Druckspeicher (10) speist, der mit der Fahrwerksbremse verbindbar ist.

10. Luftfahrzeugfahrwerk nach einem der vorhergehenden Ansprüche, wobei die mit dem Fahrwerksrad (14) gekoppelte Hydraulikpumpe (12) mit einem zentralen Niederdruckreservoir (16) der Hydraulikversorgung (1) verbunden ist.

11. Luftfahrzeugfahrwerk nach einem der vorhergehenden Ansprüche, wobei zwei Hydraulikpumpen (12) vorgesehen sind, die mit jeweils einem Bugfahrwerksrad (14) gekoppelt sind, wobei eine der zwei Hydraulikpumpen (12) mit der Hydraulikversorgung (1) eines rechten Hauptfahrwerks und die andere der zwei Hydraulikpumpen (12) mit der Hydraulikversorgung (1) eines linken Hauptfahrwerks verbunden ist.

12. Luftfahrzeugfahrwerk nach einem der vorhergehenden Ansprüche, wobei mindestens eine Hydraulikleitung (17), die die zumindest eine bugfahrwerksseitige Hydraulikpumpe (12) und die Hydraulikversorgung (1) des Hauptfahrwerks verbindet, vorzugsweise über mindestens ein elektromagnetisches Schaltventil (22, 23) in eine Verbindung der Hydraulikversorgung (1) des Hauptfahrwerks mit der Hydraulikversorgung (21) des Bugfahrwerks umschaltbar ist.
